# EUROPÄISCHE PATENTSCHRIFT

(11) **EP 1 207 667 B1**
(45) Veröffentlichungstag und Bekanntmachung des Hinweises auf die Patenterteilung: **22.03.2006**
(21) Anmeldenummer: 01126053.6
(22) Anmeldetag: 31.10.2001
(51) Int. Cl.: H04L 29/06, H04Q 3/00, H04M 7/00, H04Q 11/04

(54) **Verfahren und Kommunikationssystem zum Aufbau einer H.323-oder SIP-Verbindung von einem Ursprungsnetz zu einem ursprungsnetzexternen Verbindungsziel**
Method and communication system for establishing an H.323 or SIP connection from a source network to an external connection target
Procédé et système de communication pour l'établissement d'une liaison H.323 ou SIP à partir d'un réseau source vers une destination externe

(30) Priorität: 17.11.2000 DE 10056949
(43) Veröffentlichungstag der Anmeldung: 22.05.2002
(73) Patentinhaber: SIEMENS AKTIENGESELLSCHAFT, 80333 München (DE)
(72) Erfinder: Saller, Franz, 82061 Neuried (DE)

(56) Entgegenhaltungen:
- EP-A- 0 999 712
- REID M: "Multimedia conferencing over ISDN and IP networks using ITU-T H-series recommendations: architecture, control and coordination" COMPUTER NETWORKS, ELSEVIER SCIENCE PUBLISHERS B.V., AMSTERDAM, NL, Bd. 31, Nr. 3, 11. Februar 1999 (1999-02-11), Seiten 225-235, XP004304600 ISSN: 1389-1286
- SCHULZRINNE H ET AL: "SIGNALING FOR INTERNET TELEPHONY" PROCEEDINGS OF THE INTERNATIONAL CONFERENCE ON NETWORK PROTOCOLS, XX, XX, Oktober 1998 (1998-10), Seiten 1-27, XP002939494

## Beschreibung

In zeitgemäßen Kommunikationssystemen werden Verbindungen, z.B. zur Sprach-, Video- oder Multimediakommunikation, in zunehmendem Maße auch über paketorientierte Kommunikationsnetze, wie z.B. Lokale Netze (LAN: Local Area Network) oder Weitverkehrsnetze (WAN: Wide Area Network), geführt. Auf dieser Technik basiert beispielsweise die sogenannte Internet-Telefonie, die häufig auch als "Voice over Internet Protocol" (VoIP) bezeichnet wird. In solchen paketorientierten Kommunikationsnetzen werden zu übermittelnde Daten in einzelne Datenpakete aufgeteilt, die mit einer das jeweilige Verbindungsziel identifizierenden Transportadresse versehen werden. Anhand dieser Transportadresse werden die Datenpakete in den Kommunikationsnetzen weitgehend unabhängig voneinander zum jeweiligen Verbindungsziel vermittelt.

Zum gegenwärtigen Zeitpunkt basiert ein Aufbau von Sprach-, Video- oder Multimedia-Verbindungen über ein paketorientiertes Kommunikationsnetz sehr häufig auf der ITU-T-Empfehlung H.323. Die H.323-Empfehlung beschreibt Multimedia-Verbindungen innerhalb eines paketorientierten Kommunikationsnetzes sowie Multimedia-Verbindungen, die von einem paketorientierten Kommunikationsnetz über eine Gatewayeinrichtung in ein leitungsvermitteltes Kommunikationsnetz, z.B. ein ISDN-Netz, und von diesem zu einem Verbindungsziel weitervermittelt werden. Eine solche Weitervermittlung über ein leitungsvermitteltes Kommunikationsnetz nutzt allerdings nicht die vorteilhafte Infrastruktur bestehender paketorientierter Kommunikationsnetze, wie beispielsweise des Internet. Aus der H.323-Empfehlung ist zwar auch bekannt, H.323-Verbindungen von einem Ursprungsnetz über ein paketorientiertes Kommunikationsnetz zu einem Zielnetz aufzubauen, doch erfordert ein solcher Verbindungsaufbau gemäß dem bisherigen Stand der Technik eine Signalisierung zwischen einem sogenannten Gatekeeper des Ursprungsnetzes und einem Gatekeeper des Zielnetzes. Eine solche Signalisierung zwischen verschiedenen Gatekeepern bedingt jedoch einen hohen Implementierungsaufwand, insbesondere wenn sich zwischen dem Ursprungsnetz und dem Zielnetz mehrere paketorientierte Kommunikationsnetze befinden. Zudem ist es erforderlich, im Gatekeeper bzw. in der Gatewayeinrichtung des Ursprungsnetzes die Adressen aller potentiellen Zielnetze zu verwalten und zu administrieren. Dies erfordert in vielen Fällen einen unverhältnismäßig hohen Aufwand, insbesondere bei über das Internet führenden H.323-Verbindungen, die zu weltweit verteilten Verbindungszielen führen können.

Ein Aufbau von Sprach-, Video- oder Multimediaverbindungen basiert häufig auch auf dem sog. SIP-Protocol (SIP: Session Initiation Protocol) des IETF-Forums (IETF: Internet Engineering Task Force). Jedoch weist auch das SIP-Protokoll die oben beschriebenen Mängel auf. Das SIP-Protokoll ist beispielsweise aus dem Dokument RFC 2543: "SIP: Session Initiation Protocol" von M. Handley, H. Schulzrinne, E. Schooler und J. Rosenberg, März 1999 bekannt.

Aus der Druckschrift EP 999712 ist ein Verfahren zum Aufbau einer netzwerkübergreifenden Sprach- und Datenverbindung bekannt, bei dem ein Verbindungsaufbau sowie ein gegenseitiger Austausch von Adressinformation durch einen herkömmlichen Telefonanruf über ein öffentliches Netz initiiert wird. Die Durchführung dieses Verfahrens erfordert jedoch neben einem Datennetz auch ein Telefonnetz. Darüber hinaus ist - im Gegensatz zur rein paketorientierten H.323-oder SIP-Technologie - eine aufwendige Kombination und Abstimmung ganz unterschiedlicher Verbindungs- und Übertragungstechniken erforderlich.

Es ist Aufgabe der vorliegenden Erfindung, ein Verfahren und ein Kommunikationssystem zum Aufbau einer H.323- oder SIP-Verbindung von einem Ursprungsnetz über mindestens ein paketorientiertes Kommunikationsnetz zu einem ursprungsnetzexternen Verbindungsziel anzugeben, bei denen im Ursprungsnetz keine Administration aller potentiellen Verbindungsziele erforderlich ist.

Gelöst wird diese Aufgabe durch ein Verfahren mit den Merkmalen des Patentanspruchs 1 und durch ein Kommunikationssystem mit den Merkmalen des Patentanspruchs 4.

Die Erfindung erlaubt es, H.323- oder SIP-Verbindungen, z.B. zur Sprach-, Video- und/oder Multimediakommunikation, von einem Ursprungsnetz ohne großen Administrationsaufwand zu einer Vielzahl von ursprungsnetzexternen Verbindungszielen aufzubauen. Der Verbindungsaufbau erfolgt hierbei über mehrere kaskadierte, d.h. logisch hintereinander angeordnete, Gatewayeinrichtungen, die eine H.323-oder SIP-Verbindungsaufbausignalisierung zwischen dem Ursprungsnetz und dem Verbindungsziel über mindestens ein paketorientiertes Transitnetz vermitteln. Eine Gatewayeinrichtung vermittelt dabei eine H.323- oder SIP-Verbindungsaufbausignalisierung nur bis zur jeweils logisch nachfolgenden Gatewayeinrichtung. Somit ist es nicht erforderlich, dass in jeder derartigen Gatewayeinrichtung alle potentiellen Verbindungsziele verwaltet werden, sondern nur die logisch benachbarten Gatewayeinrichtungen. Dies verringert den erforderlichen Administrationsaufwand erheblich. Darüber hinaus können die Möglichkeiten des Datenpakettransports unterschiedlicher, zum Verbindungsziel hinführender Kommunikationsnetze in vollem Maße genutzt werden.

Das ursprungsnetzexterne Verbindungsziel kann z.B. ein Zielendgerät, ein Zielkommunikationsnetz, ein Teilnetz oder eine weitere Gatewayeinrichtung zu einem weiteren Kommunikationsnetz sein. Im Übrigen sei unter einer H.323-Verbindung bzw. einer H.323-Verbindungsaufbausignalisierung eine Verbindung bzw. eine Verbindungsaufbausignalisierung gemäß der ITU-T-Empfehlung H.323 verstanden. Entsprechend sei unter einer SIP-Verbindung bzw. einer SIP-Verbindungsaufbausignalisierung eine Verbindung bzw. eine Verbindungsaufbausignalisierung gemäß dem SIP-Protokoll des IETF-Forums verstanden.

Zum Vermitteln der H.323- oder SIP-Verbindungsaufbausignalisierung wird in einer jeweiligen Gatewayeinrichtung aus einer das Verbindungsziel identifizierenden logischen Adressinformation oder eines Teiles davon eine Transportadresse abgeleitet, anhand der die H.323- oder SIP-Verbindungsaufbausignalisierung zur jeweils logisch nachfolgenden Gatewayeinrichtung vermittelt wird.

Vorteilhafte Ausführungsformen und Weiterbildungen der Erfindung sind in den abhängigen Ansprüchen angegeben.

Die logische Adressinformation, aus der die jeweiligen Transportadressen abgeleitet werden, kann beispielsweise eine Endgeräterufnummer, Vorwahlnummer, Servicenummer, Email-Adresse, Alias-Adresse, einen sogenannten URL (Uniform Resource Locator) und/oder eine weitere in einer der anwendungsorientierten Schichten (Schichten 5-7) des OSI-Referenzmodells angesiedelte Adressinformation umfassen. Ferner können die Transportadressen beispielsweise durch sogenannte IP-Adressen (IP: Internet Protocol) oder andere auf der Vermittlungsschicht oder Transportschicht des OSI-Referenzmodells gültige Adressen realisiert sein.

Gemäß einer vorteilhaften Ausführungsform der Erfindung können verschiedene Gatewayeinrichtungen eine jeweilige Transportadresse aus unterschiedlichen Teilen der logischen Adressinformation ableiten. So kann beispielsweise die dem H.323-Ursprungsnetz nächstgelegene Gatewayeinrichtung eine Transportadresse aus einer in der logischen Adressinformation enthaltenen Vorwahlnummer ableiten, um eine der betreffenden Vorwahlnummer zugeordnete Gatewayeinrichtung zu adressieren. Die so adressierte Gatewayeinrichtung kann dann eine weitere Transportadresse z.B. aus einer Teil-Wahlinformation, die aus der Vorwahlnummer und der ersten Ziffer einer in der logischen Adressinformation enthaltenen Endgeräterufnummer besteht, ableiten, um so eine weitere Gatewayeinrichtung zu adressieren. Zur Unterstützung unterschiedlicher Hierarchien von Transitnetzen und/oder vermittelnden Gatewayeinrichtungen kann die logische Adressinformation gegebenenfalls weiter strukturiert und/oder unterteilt werden.

Nach einer vorteilhaften Weiterbildung der Erfindung kann durch die H.323- oder SIP-Verbindungsaufbausignalisierung ein Übermitteln einer das Übermittlungsziel oder eine zwischengelagerte Gatewayeinrichtung identifizierenden Transportadresse in das Ursprungsnetz veranlaßt werden. Anhand dieser rückübermittelten Transportadresse können im Rahmen der H.323- oder SIP-Verbindung nachfolgend zu übertragende Nutzdaten auf einem direkten Leitweg vom Ursprungsnetz zum durch die Transportadresse identifizierten Übermittlungsziel bzw. zur identifizierten Gatewayeinrichtung übertragen werden. Auf diese Weise kann beispielsweise von einem oder mehreren an der H.323- oder SIP-Verbindungsaufbausignalisierung beteiligten Gatewayeinrichtungen, die jeweils abgeleitete Transportadresse in das Ursprungsnetz übermittelt werden, um dort für eine direkte Übertragung von Nutzdaten anhand der übermittelten Transportadresse zu dienen.

Weiterhin kann das Ursprungsnetz einen H.323- oder SIP-Gatekeeper zum Steuern ursprungsnetzinterner H.323- oder SIP-Verbindungen aufweisen. In diesem Fall kann die Gatewayeinrichtung des Ursprungsnetzes vorzugsweise eine erste H.323- oder SIP-Schnittstelle zum Ursprungsnetz und eine zweite H.323- oder SIP-Schnittstelle zum ersten Transitnetz aufweisen, wobei die erste H.323- oder SIP-Schnittstelle in einem gatekeepergesteuerten H.323- bzw. SIP-Modus und simultan dazu die zweite H.323- oder SIP-Schnittstelle in einem gatekeeperlosen H.323- bzw. SIP-Modus betrieben wird. Auf diese Weise verbirgt die Gatewayeinrichtung gewissermaßen die Weiterführung von Verbindungen zu ursprungsnetzexternen Verbindungszielen vor dem H.323- bzw. SIP-Gatekeeper.

Nach einer weiteren Ausführungsform der Erfindung kann das erste Transitnetz mit dem zweiten Transitnetz identisch sein. In diesem Fall wird die H.323- oder SIP-Verbindungsaufbausignalisierung von der ersten Gatewayeinrichtung über das erste Transitnetz zur zweiten Gatewayeinrichtung vermittelt, die die H.323- oder SIP-Verbindungsaufbausignalisierung wiederum über das erste Transitnetz zur dritten Gatewayeinrichtung weitervermittelt. Ein Vorteil einer derartigen Verfahrensweise gegenüber einer direkten Vermittlung der H.323- oder SIP-Verbindungsaufbausignalisierung von der ersten zur dritten Gatewayeinrichtung besteht darin, dass die zu erbringende Vermittlungsleistung auf mehrere Gatewayeinrichtungen oder Hierarchien von Gatewayeinrichtungen verteilt werden kann.

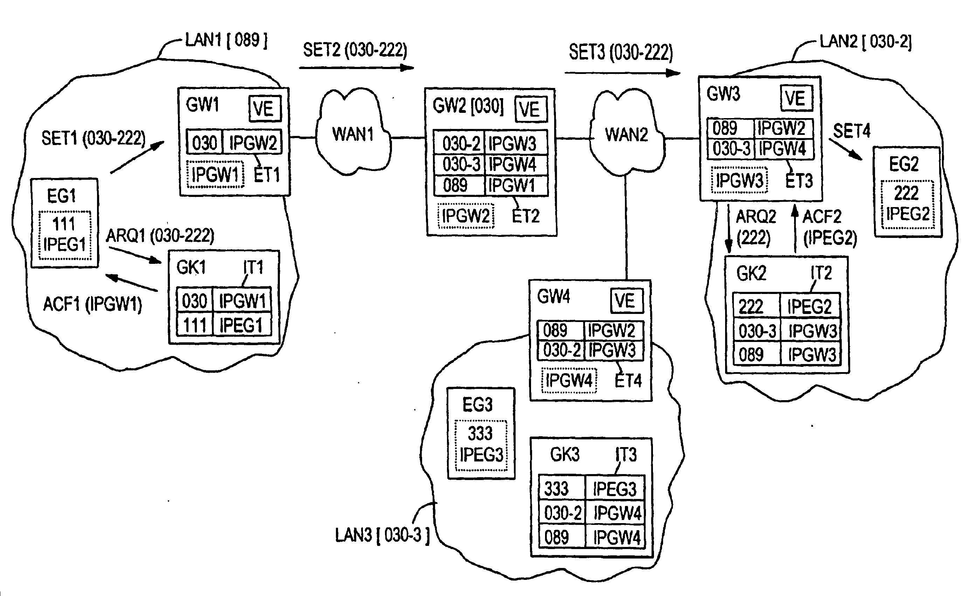

Ein Ausführungsbeispiel der Erfindung wird nachfolgend anhand der Zeichnung näher erläutert.
Die Figur zeigt in schematischer Darstellung ein Kommunikationssystem, das mehrere über Weitverkehrsnetze gekoppelte Lokale Netze umfasst, beim Aufbau einer H.323-Verbindung.

In der Figur ist ein mehrere Lokale Netze LAN1, LAN2 und LAN3 sowie Weitverkehrsnetze WAN1 und WAN2 umfassendes Kommunikationssystem schematisch dargestellt. Das Lokale Netz LAN1 ist hierbei über eine Gatewayeinrichtung GW1 mit dem Weitverkehrsnetz WAN1 und dieses über eine Gatewayeinrichtung GW2 mit dem Weitverkehrsnetz WAN2 gekoppelt. An das Weitverkehrsnetz WAN2 sind ferner über eine Gatewayeinrichtung GW3 das Lokale Netz LAN2 sowie über eine Gatewayeinrichtung GW4 das Lokale Netz LAN3 angekoppelt. Die Lokalen Netze LAN1, LAN2, LAN3 sind somit durch eine Kaskadierung der Gatewayeinrichtungen GW1,...,GW4 über mehrere Kommunikationsnetze, hier WAN1 und WAN2, hinweg miteinander koppelbar. Die Weitverkehrsnetze WNA1 und WAN2 können beispielsweise durch das Internet realisiert sein. Die Lokalen Netze LAN1, LAN2 und LAN3 bilden jeweils eine sogenannte H.323-Domäne gemäß der ITU-T-Empfehlung H.323. Die Gatewayeinrichtungen GW1, GW2, GW3 und GW4 entsprechen ebenfalls der H.323-Empfehlung.

Nach einer alternativen Ausführungsform der Erfindung können die Lokalen Netze LAN1, LAN2 und LAN3 sowie die Gatewayeinrichtungen GW1, GW2, GW3 und GW4 auch gemäß dem SIP-Protokoll des IETF-Forums betrieben werden.

Die Lokalen Netze LAN1, LAN2, LAN3 und die Weitverkehrsnetze WAN1, WAN2 unterstützen jeweils einen paketorientierten Datentransport. Für das vorliegende Ausführungsbeispiel sei angenommen, dass die Datenpaketübertragung in den Lokalen Netzen LAN1, LAN2, LAN3 und in den Weitverkehrsnetzen WAN1, WAN2 jeweils auf dem sogenannten Internet-Protokoll (IP) basiert, bei dem Datenpakete anhand einer in diesen jeweils enthaltenen IP-Transportadresse, kurz IP-Adresse, durch das jeweilige Kommunikationsnetz LAN1, LAN2, LAN3, WAN1 bzw. WAN2 vermittelt werden.

Für das vorliegende Ausführungsbeispiel sei weiterhin angenommen, dass sich das Lokale Netz LAN1 im Vorwahlbezirk von München mit der öffentlichen Vorwahlnummer 089 und die Lokalen Netze LAN2 und LAN3 sowie die Gatewayeinrichtung GW2 im Vorwahlbezirk von Berlin mit der öffentlichen Vorwahlnummer 030 befinden. Dementsprechend ist dem Lokalen Netz LAN1 die Vorwahlnummer 089 und den Lokalen Netzen LAN2 und LAN3 sowie der Gatewayeinrichtung GW2 die Vorwahlnummer 030 zugeordnet.

Die Lokalen Netze LAN1, LAN2 und LAN3 verfügen jeweils über ein Endgerät EG1, EG2 bzw. EG3, das durch eine diesem jeweils zugeordnete Endgeräterufnummer 111, 222 bzw. 333 innerhalb des betreffenden Lokalen Netzes LAN1, LAN2 bzw. LAN3 logisch identifiziert wird. Netzübergreifend werden die Endgeräte in üblicher Weise durch eine die betreffende Vorwahlnummer und die Endgeräterufnummer umfassende logische Adressinformation identifiziert, die zum Aufbau einer netzübergreifenden H.323-Verbindung als Wahlinformation einzugeben ist. Die Endgeräte EG1, EG2 und EG3 können z.B. durch Sprach-, Video- und/oder Multimedia-Endgeräte sowie insbesondere durch Personalcomputer realisiert sein.

Für das vorliegende Ausführungsbeispiel sei angenommen, dass die Endgeräterufnummern auch aller weiteren im Lokalen Netz LAN2 befindlichen Endgeräte (nicht dargestellt) mit der Ziffer 2 und die Endgeräterufnummern auch aller weiteren im Lokalen Netz LAN3 befindlichen Endgeräte (nicht dargestellt) mit der Ziffer 3 beginnen. Somit ist die Wahlinformation, die zum netzübergreifenden Anruf eines im Lokalen Netz LAN2 bzw. LAN3 befindlichen Endgerätes einzugeben ist, durch eine aus der Vorwahlnummer 030 und der ersten Ziffer 2 bzw. 3 der Endgeräterufnummer gebildete Teil-Wahlinformation 030-2 bzw. 030-3 gekennzeichnet.

Den Endgeräten EG1, EG2 und EG3 ist ferner jeweils eine IP-Adresse IPEG1, IPEG2 bzw. IPEG3 als im betreffenden Lokalen Netz LAN1, LAN2 bzw. LAN3 gültige Transportadresse zugeordnet. Die den Endgeräten EG1, EG2 und EG3 zugeordneten Endgeräterufnummern und IP-Adressen sind in der Figur durch punktierte Rechtecke hervorgehoben.

Auch den Gatewayeinrichtungen GW1, GW2, GW3 und GW4 ist jeweils eine IP-Adresse IPGW1, IPGW2, IPGW3 bzw. IPGW4 zugeordnet, durch die die betreffende Gatewayeinrichtung GW1, GW2, GW3 bzw. GW4 in den jeweils angekoppelten Kommunikationsnetzen adressierbar ist. Die einer Gatewayeinrichtung jeweils zugeordnete IP-Adresse ist in der Figur jeweils durch ein punktiertes Rechteck hervorgehoben. Nach einer alternativen Ausführungsform kann vorgesehen sein, dass eine Gatewayeinrichtung GW1, GW2, GW3, GW4 in verschiedenen angekoppelten Kommunikationsnetzen durch unterschiedliche IP-Adressen adressiert wird.

Die Gatewayeinrichtungen GW1,...,GW4 weisen jeweils eine Adresstabelle ET1, ET2, ET3 bzw. ET4 zum Aufbau netzübergreifender H.323-Verbindungen auf. In den Adresstabellen ET1, ...., ET4 sind netzübergreifende logische Adressinformationen, hier Vorwahlnummern und Teil-Wahlinformationen, jeweils einer IP-Transportadresse zugeordnet. Die IP-Transportadressen sind jeweils in einem angekoppelten; zum jeweiligen Verbindungsziel hinführenden Kommunikationsnetz gültig und können eine Gatewayeinrichtung, das Verbindungsziel oder ein Zwischenziel adressieren. Aufgrund der Kaskadierung der Gatewayeinrichtungen GW1, ..., GW4 genügt es, in einer jeweiligen Adresstabelle ET1, ...,ET3 bzw. ET4 einer betrachteten Gatewayeinrichtung GW1, ..., GW3 bzw. GW4 nur diejenigen Gatewayeinrichtungen einzutragen, die zur betrachteten Gatewayeinrichtung bezüglich der vorgesehenen Vermittlungspfade unmittelbar benachbart sind. Dies verringert den erforderlichen Administrationsaufwand erheblich.

Im vorliegenden Ausführungsbeispiel ist in der Adresstabelle ET1 der Gatewayeinrichtung GW1 die Vorwahlnummer 030 des Vorwahlbezirks von Berlin der IP-Adresse IPGW2 der für diesen Vorwahlbezirk zuständigen Gatewayeinrichtung GW2 zugeordnet. Entsprechend ist in der Adresstabelle ET2 der Gatewayeinrichtung GW2 die Vorwahlnummer 089 des Vorwahlbezirks von München der IP-Adresse IPGW1 der Gatewayeinrichtung GW1 zugeordnet. Weiterhin ist in der Adresstabelle ET2 die Teil-Wahlinformation 030-2, die die im Lokalen Netz LAN2 befindlichen Endgeräte kennzeichnet, der IP-Adresse IPGW3 der Gatewayeinrichtung GW3 des Lokalen Netzes LAN2 zugeordnet und die Teil-Wahlinformation 030-3, die die im Lokalen Netz LAN3 befindlichen Endgeräte kennzeichnet, der IP-Adresse IPGW4 der Gatewayeinrichtung GW4 des Lokalen Netzes LAN3 zugeordnet. Ferner ist in der Adresstabelle ET3 die Vorwahlnummer 089 der IP-Adresse IPGW2 der zum betreffenden Vorwahlbezirk weitervermittelnden Gatewayeinrichtung GW2 und die Teil-Wahlinformation 030-3 der IP-Adresse IPGW4 der Gatewayeinrichtung GW4 zugeordnet. Schließlich ist in der Adresstabelle ET4 die Vorwahlnummer 089 der IP-Adresse IPGW2 der zum betreffenden Vorwahlbezirk weitervermittelnden Gatewayeinrichtung GW2 und die Teil-Wahlinformation 030-2 der IP-Adresse IPGW3 der Gatewayeinrichtung GW3 zugeordnet.

Die Gatewayeinrichtungen GW1,...,GW4 verfügen ferner jeweils über eine Vermittlungseinrichtung VE zum Ableiten von IP-Transportadressen aus diesen in den Adresstabellen ET1,...,ET4 zugeordneten logischen Adressinformationen und zum Vermitteln von H.323-Verbindungsaufbausignalisierungen anhand der abgeleiteten IP-Transportadressen.

Außer den in der Figur dargestellten Gatewayeinrichtungen GW1,...,GW4 können an die Weitverkehrsnetze WAN1 und WAN2 noch beliebig viele weitere, gegebenenfalls weiter kaskadierte Gatewayeinrichtungen angekoppelt sein, durch die H.323-Verbindungen zu weiteren Vorwahlbezirken, Weitverkehrsnetzen, Lokalen Netzen, Teilnetzen und/oder Endgeräten vermittelt werden können.

In jedem der Lokalen Netze LAN1, LAN2, LAN3 ist gemäß der H.323-Empfehlung ein sogenannter Gatekeeper GK1, GK2 bzw. GK3 als Verbindungssteuerung vorgesehen. Die Gatekeeper GK1, GK2, GK3 sind jeweils für ein Steuern und Verwalten aller innerhalb der jeweiligen H.323-Domäne LAN1, LAN2 bzw. LAN3 aufzubauenden H.323-Verbindungen zuständig. Insbesondere dienen die Gatekeeper GK1, GK2 und GK3 in ihrer jeweiligen H.323-Domäne LAN1, LAN2, LAN3 zur Zugangskontrolle sowie zur Adressauflösung von logischen Adressinformationen in IP-Transportadressen für die in der jeweiligen H.323-Domäne befindlichen H.323-Kommunikationseinrichtungen. Zur Adressauflösung weisen die Gatekeeper GK1, GK2 und GK3 jeweils eine Adresstabelle IT1, IT2 bzw. IT3 auf, worin logische Adressinformationen oder Teile davon netzintern gültigen IP-Transportadressen zugeordnet sind.

Im vorliegenden Ausführungsbeispiel ist in den Adresstabellen IT1, IT2 und IT3 jeweils die Endgeräterufnummer 111, 222 bzw. 333 des in der betreffenden H.323-Domäne LAN1, LAN2 bzw. LAN3 befindlichen Endgerätes EG1, EG2 bzw. EG3 dessen jeweiliger IP-Adresse IPEG1, IPEG2 bzw. IPEG3 zugeordnet. Darüber hinaus ist in den Gatekeepern GK1, GK2 und GK3 jeweils die zur eigenen H.323-Domain LAN1, LAN2 bzw. LAN3 gehörige Gatewayeinrichtung GW1, GW3 bzw. GW4 registriert. Die Gatewayeinrichtung GW1, GW3 bzw. GW4 ist dabei unter denjenigen logischen Adressinformationen registriert, die in der Adresstabelle ET1, ET3 bzw. ET4 dieser Gatewayeinrichtung GW1, GW3 bzw. GW4 eingetragen sind. Dementsprechend ist in der Adresstabelle IT1 die IP-Adresse IPGW1 der netzübergreifenden Vorwahlnummer 030 zugeordnet. Weiterhin ist in der Adresstabelle IT2 die IP-Adresse IPGW3 einerseits der Vorwahlnummer 089 und andererseits der Teil-Wahlinformation 030-3 zugeordnet. Schließlich ist in der Adresstabelle IT3 die IP-Adresse IPGW4 der Gatewayeinrichtung GW4 einerseits der Vorwahlnummer 089 und andererseits der Teil-Wahlinformation 030-2 zugeordnet.

Vorzugsweise registrieren sich die Gatewayeinrichtungen GW1, GW3 und GW4, z.B. nach einer Änderung ihrer jeweiligen Adresstabelle ET1, ET3 bzw. ET4 oder nach einem Systemstart, selbst beim jeweiligen Gatekeeper GK1, GK3 bzw. GK4 unter den in ihrer jeweiligen Adresstabelle ET1, ET2 bzw. ET3 eingetragenen, logischen Adressinformationen.

Im Folgenden wird ein Aufbau einer H.323-Verbindung vom Endgerät EG1 des Lokalen Netzes LAN1 zum Endgerät EG2 des Lokalen Netzes LAN2 betrachtet. Der Verbindungsaufbau wird am Endgerät EG1 durch Eingabe einer aus der Vorwahlnummer 030 und der Endgeräterufnummer 222 bestehenden Wahlinformation 030-222 initiiert. Die Wahlinformation 030-222 bildet hierbei eine das Zielendgerät EG2 netzübergreifend identifizierende, logische Adressinformation.

Im Rahmen einer H.323-Verbindungsanforderung übermittelt das Endgerät EG1 eine Zugangsanfragemeldung ARQ1 (Admission Request) mit der eingegebenen Wahlinformation 030-222 zum Gatekeeper GK1. Der Gatekeeper GK1 durchsucht daraufhin seine Adresstabelle IT1 nach einer logischen Adressinformation, die zumindest mit einem ersten Teil der übermittelten Wahlinformation 030-222 übereinstimmt. Im vorliegenden Ausführungsbeispiel stimmt die logische Adressinformation unter der die Gatewayeinrichtung GW1 beim Gatekeeper GK1 registriert ist, mit der übermittelten Vorwahlnummer 030 überein. Die Gatewayeinrichtung GW1 wird damit vom Gatekeeper GK1 als vermeintliches Verbindungsziel ermittelt. Infolgedessen wird vom Gatekeeper GK1 eine Anfragebestätigungsmeldung ACF1 (Admission Confirmation) mit der der Gatewayeinrichtung GW1 in der Adresstabelle IT1 zugeordneten IP-Adresse IPGW1 zum Endgerät EG1 übermittelt.

Nach alternativen Ausführungsformen des H.323-Verbindungsaufbaus kann vom Endgerät EG1 anstelle der Vorwahlnummer 030 und der Endgeräterufnummer 222 z.B. eine das Endgerät EG2 identifizierende Alias-Adresse, Email-Adresse oder URL (Uniform Resource Locator) als logische Adressinformation zum Gatekeeper GK1 übermittelt werden. Sofern einer derartigen logischen Adressinformation in der Adresstabelle IT1 eine IP-Transportadresse zugeordnet ist, wird diese IP-Transportadresse in der Anfragebestätigungsmeldung ACF1 zum Endgerät EG1 übertragen.

Anhand der übermittelten IP-Adresse IPGW1 wird vom Endgerät EG1 eine H.323-Verbindungsaufbaumeldung SET1 (Setup) gemäß H.323-Empfehlung mit der Wahlinformation 030-222 zur Gatewayeinrichtung GW1 übertragen. Die Vermittlungseinrichtung VE der Gatewayeinrichtung GW1 durchsucht daraufhin die Adresstabelle ET1 nach einer logischen Adressinformation, die zumindest mit einem ersten Teil der übermittelten Wahlinformation 030-222 übereinstimmt. Im vorliegenden Ausführungsbeispiel wird die in der Wahlinformation 030-222 enthaltene Vorwahlnummer 030 in der Adresstabelle ET1 aufgefunden. Die Vorwahlnummer 030 ist in dieser Adresstabelle ET1 der im Weitverkehrsnetz WAN1 gültigen IP-Adresse IPGW2 der Gatewayeinrichtung GW2 zugeordnet, woran die Gatewayeinrichtung GW1 erkennt, dass die H.323-Verbindung über das Weitverkehrsnetz WAN1 weiterzuführen ist. Da die Weiterführung der H.323-Verbindung durch den Gatekeeper GK1 aufgrund seiner auf das Lokale Netz LAN1 beschränkten Zuständigkeit nicht steuerbar ist, und der Gatekeeper GK1 Verbindungen, deren Zieladressinformation er nicht selbst auflösen kann, nicht zulassen würde, übermittelt die Gatewayeinrichtung GW1 für die Weiterführung der H.323-Verbindung keine Zugangsanfragemeldung zum Gatekeeper GK1. Die Gatewayeinrichtung GW1 verbirgt somit gewissermaßen die Weiterführung der H.323-Verbindung vor dem Gatekeeper GK1. Die Gatewayeinrichtung GW1 wird damit in Richtung zum Weitverkehrsnetz WAN1 in einem gatekeeperlosen H.323-Betriebsmodus und simultan dazu in Richtung zum Lokalen Netz LAN1 in einem gatekeepergesteuerten H.323-Betriebsmodus betrieben.

Anhand der der Vorwahlnummer 030 zugeordneten IP-Adresse IPGW2 wird von der Gatewayeinrichtung GW1 eine H.323-Verbindungsaufbaumeldung SET2 mit der Vorwahlnummer 030 und der Endgeräterufnummer 222 zur Gatewayeinrichtung GW2 übermittelt. Die Gatewayeinrichtung GW2 erkennt, dass die Absender-IP-Adresse IPGW1 der die H.323-Verbindungsaufbaumeldung SET2 transportierenden Datenpakete in ihrer Adreßtabelle ET2 enthalten ist und nimmt infolgedessen die H.323-Verbindung an. Die Gatewayeinrichtung GW1 wird dadurch von der Gatewayeinrichtung GW2 als sogenannter "Trusted Gateway" akzeptiert. Die Vermittlungseinrichtung VE der Gatewayeinrichtung GW2 durchsucht daraufhin die Adresstabelle ET2 nach einer logischen Adressinformation, die zumindest mit einem Teil der übermittelten Wahlinformation 030-222 übereinstimmt. Im vorliegenden Ausführungsbeispiel wird die in der Wahlinformation 030-222 enthaltene Teil-Wahlinformation 030-2 in der Adresstabelle ET2 aufgefunden. Die Teil-Wahlinformation 030-2 ist in dieser Adresstabelle ET2 der im Weitverkehrsnetz WAN2 gültigen IP-Adresse IPGW3 der Gatewayeinrichtung GW3 zugeordnet. Anhand dieser IP-Adresse IPGW3 wird von der Gatewayeinrichtung GW2 eine H.323-Verbindungsaufbaumeldung SET3 mit der Vorwahlnummer 030 und der Endgeräterufnummer 222 zu der durch die IP-Adresse IPGW3 identifizierten Gatewayeinrichtung GW3 übermittelt. Die Gatewayeinrichtung GW3 erkennt, dass die Absender-IP-Adresse IPGW2 der die H.323-Verbindungsaufbaumeldung SET3 transportierenden Datenpakete in ihrer Adreßtabelle ET3 enthalten ist und nimmt infolgedessen die H.323-Verbindung an.

Die Gatewayeinrichtung GW3 entfernt aus der übermittelten Wahlinformation 030-222 die Vorwahlnummer 030 und übermittelt eine Zugangsanfragemeldung ARQ2 mit der verbleibenden Endgeräterufnummer 222 zum Gatekeeper GK2. Der Gatekeeper GK2 interpretiert dies als Anforderung einer Verbindung von der Gatewayeinrichtung GW3 zu einem durch die Endgeräterufnummer 222 logisch identifizierten Endgerät. Anhand der Adresstabelle IT2 ermittelt der Gatekeeper GK2, dass der Endgeräterufnummer 222 die IP-Adresse IPEG2 des Endgerätes EG2 zugeordnet ist. Infolgedessen übermittelt der Gatekeeper GK2 eine Anfragebestätigungsmeldung ACF2 mit der IP-Adresse IPEG2 des Endgerätes EG2 zur Gatewayeinrichtung GW3. Anhand der übermittelten IP-Adresse IPEG2 sendet die Gatewayeinrichtung GW3 eine H.323-Verbindungsaufbaumeldung SET4 zum Endgerät EG2, wodurch ein netzinterner Verbindungsaufbau zwischen der Gatewayeinrichtung GW3 und dem Endgerät EG2 veranlasst wird. Über diese netzinterne H.323-Verbindung wird schließlich die vom Endgerät EG1 kommende H.323-Verbindung zum Endgerät EG2 durchgeschaltet.

Auf diese Weise wird eine Verbindung zwischen Endgeräten EG1 und EG2 verschiedener, über mehrere Weitverkehrsnetze WAN1 und WAN2 gekoppelter H.323-Domänen LAN1 und LAN2 hergestellt, ohne dass eine Signalisierung zwischen den jeweils zuständigen Gatekeepern GK1 und GK2 notwendig wäre.

Zur Optimierung der Nutzdatenübertragung im Rahmen der H.323-Verbindung zwischen den Endgeräten EG1 und EG2 kann die Gatewayeinrichtung GW3 ferner die IP-Adresse IPEG2 des Zielendgerätes EG2, z.B. mit Mitteln gemäß der ITU-T-Empfehlung H.245 oder innerhalb von IP-Datenpaketen, zum rufenden Endgerät EG1 übertragen. Das Endgerät EG1 kann daraufhin die zu übertragenden Nutzdaten innerhalb von mit der IP-Adresse IPEG2 des Zielendgerätes EG2 versehenen Datenpaketen direkt zum Zielendgerät EG2 übertragen. Der Übertragungsweg der Nutzdaten ist damit weitgehend unabhängig vom Übertragungsweg der H.323-Verbindungsaufbausignalisierung. Die Nutzdaten können so über beliebige internetprotokollbasierte Transportnetze, wie z.B. das Internet, WAN1 und/oder WAN2, gegebenenfalls unter Umgehung der zum Verbindungsaufbau genutzten Gatewayeinrichtungen GW1, GW2, GW3 übertragen werden. Dabei können in den Transportnetzen vorgesehene Leitwegoptimierungen uneingeschränkt genutzt werden.

Die Erfindung erfordert keine Modifikation der zu verbindenden Endgeräte, so dass beliebige Endgeräte gemäß H.323-Empfehlung eine domänenübergreifende H.323-Verbindung über das Internet-Protokoll als Transportschicht aufbauen können. Hierbei werden logische Adressinformationen, wie Vorwahlnummern, Endgeräterufnummern oder Teile davon, die einer anderen Kommunikationsschicht als die verwendeten IP-Transportadressen angehören, als Zugangsinformation zu netzexternen Gatewayeinrichtungen genutzt, die - zumindest logisch - netzübergreifend kaskadiert sind. Aufgrund der Kaskadierung der Gatewayeinrichtungen sind nicht in jeder Gatewayeinrichtung alle potentiellen H.323-Verbindungsziele zu verwalten, sondern nur logisch unmittelbar benachbarte Verbindungsziele, Zwischenziele und Gatewayeinrichtungen.

## Patentansprüche

1. Verfahren zum Aufbau einer H.323- oder SIP-Verbindung von einem Ursprungsnetz (LAN1) zu einem durch eine logische Adressinformation (030-222) identifizierten, ursprungsnetzexternen Verbindungsziel (EG2), bei dem
- eine H.323- oder SIP-Verbindungsaufbausignalisierung (SET1, ..., SET4) mittels einer ersten Gatewayeinrichtung (GW1) vom Ursprungsnetz (LAN1) über ein erstes Transitnetz (WAN1) zu einer zweiten Gatewayeinrichtung (GW2), mittels dieser über ein zweites Transitnetz (WAN2) zu einer dritten Gatewayeinrichtung (GW3) und mittels dieser in ein zum Verbindungsziel (EG2) weiterführendes Kommunikationsnetz (LAN2) vermittelt wird, wobei
- durch die erste Gatewayeinrichtung (GW1) aus zumindest einem Teil (030) der logischen Adressinformation (030-222) eine die zweite Gatewayeinrichtung (GW2) im ersten Transitnetz (WAN1) identifizierende Transportadresse (IPGW2) abgeleitet wird, anhand der die H.323- oder SIP-Verbindungsaufbausignalisierung zur zweiten Gatewayeinrichtung (GW2) vermittelt wird, und durch die zweite Gatewayeinrichtung (GW2) aus zumindest einem weiteren Teil (030-2) der logischen Adressinformation (030-222) eine die dritte Gatewayeinrichtung (GW3) im zweiten Transitnetz (WAN2) identifizierende Transportadresse (IPGW3) abgeleitet wird, anhand der die H.323- oder SIP-Verbindungsaufbausignalisierung zur dritten Gatewayeinrichtung (GW3) vermittelt wird.

2. Verfahren nach Anspruch 1,
**dadurch gekennzeichnet,**
**dass** die erste Gatewayeinrichtung (GW1) eine Transportadresse (IPGW2) aus einem anderen Teil (030) der logischen Adressinformation (030-222) ableitet als die zweite Gatewayeinrichtung (GW2).

3. Verfahren nach einem der vorhergehenden Ansprüche,
**dadurch gekennzeichnet,**
**dass** durch die H.323- oder SIP-Verbindungsaufbausignalisierung (SET1, ..., SET4) ein Übermitteln einer das Übermittlungsziel (EG2) identifizierenden Transportadresse (IPEG2) in das Ursprungsnetz (LAN1) veranlaßt wird, und infolgedessen im Rahmen der H.323- oder SIP-Verbindung zu übertragende Nutzdaten anhand der übermittelten Transportadresse (IPEG2) auf einem direkten Leitweg vom Ursprungsnetz (LAN1) zum Übermittlungsziel (EG2) übertragen werden.

4. Kommunikationssystem zum Aufbau einer H.323- oder SIP-Verbindung von einem Ursprungsnetz (LAN1) zu einem durch eine logische Adressinformation (030-222) identifizierten, ursprungsnetzexternen Verbindungsziel (EG2), mit
- einer ersten Gatewayeinrichtung (GW1) zum Vermitteln einer H.323- oder SIP-Verbindungsaufbausignalisierung (SET1, ..., SET4) vom Ursprungsnetz (LAN1) in ein erstes Transitnetz (WAN1), einer zweiten Gatewayeinrichtung (GW2) zum Vermitteln der H.323- oder SIP-Verbindungsaufbausignalisierung vom ersten Transitnetz (WAN1) in ein zweites Transitnetz (WAN2) sowie einer dritten Gatewayeinrichtung (GW3) zum Vermitteln der H.323- oder SIP-Verbindungsaufbausignalisierung vom zweiten Transitnetz (WAN2) in ein zum Verbindungsziel (EG2) weiterführendes Kommunikationsnetz (LAN2), wobei
- die erste Gatewayeinrichtung (GW1) so ausgelegt ist, dass in der ersten Gatewayeinrichtung (GW1) zumindest einem Teil (030) der logischen Adressinformation (030-222) eine die zweite Gatewayeinrichtung (GW2) im ersten Transitnetz (WAN1) identifizierende Transportadresse (IPGW2) zugeordnet wird, und die zweite Gatewayeinrichtung (GW2) so ausgelegt ist, dass in der zweiten Gatewayeinrichtung (GW2) zumindest einem weiteren Teil (030-2) der logischen Adressinformation (030-222) eine die dritte Gatewayeinrichtung (GW3) im zweiten Transitnetz (WAN2) identifizierende Transportadresse (IPGW3) zugeordnet wird, und wobei
- die Gatewayeinrichtungen jeweils eine Vermittlungseinrichtung (VE) aufweisen zum Ableiten von Transportadressen aus diesen zugeordneten logischen Adressinformationen und zum Vermitteln von H.323- oder SIP-Verbindungsaufbausignalisierungen anhand der abgeleiteten Transportadressen.

5. Kommunikationssystem nach Anspruch 4,
**dadurch gekennzeichnet,**
**dass** das Ursprungsnetz (LAN1) einen H.323- oder SIP-Gatekeeper (GK1) zum Steuern ursprungsnetzinterner H.323-oder SIP-Verbindungen aufweist.

6. Kommunikationssystem nach Anspruch 5,
**dadurch gekennzeichnet,**
**dass** die erste Gatewayeinrichtung (GW1) eine erste H.323-oder SIP-Schnittstelle zum Ursprungsnetz (LAN1) und eine zweite H.323- oder SIP-Schnittstelle zum ersten Transitnetz (WAN1) aufweist, wobei
die erste H.323- oder SIP-Schnittstelle zum Betrieb in einem gatekeepergesteuerten H.323- bzw. SIP-Modus und die zweite H.323- oder SIP-Schnittstelle zum simultanen Betrieb in einem gatekeeperlosen H.323- bzw. SIP-Modus ausgestaltet ist.

7. Kommunikationssystem nach einem der vorhergehenden Ansprüche 4-6,
**dadurch gekennzeichnet,**
**dass** das erste Transitnetz (WAN1) mit dem zweiten Transitnetz (WAN2) identisch ist.

8. Kommunikationssystem nach einem der vorhergehenden Ansprüche 4 - 7,
**dadurch gekennzeichnet,**
**dass** die logische Adressinformation (030-222) eine Vorwahlnummer, Servicenummer und/oder eine Endgeräterufnummer umfasst.

9. Kommunikationssystem nach einem der vorhergehenden Ansprüche 4-8,
**dadurch gekennzeichnet,**
**dass** die logische Adressinformation eine Email-Adresse, Alias-Adresse und/oder einen URL, Uniform Resource Locator, umfasst.

10. Kommunikationssystem nach einem der vorhergehenden Ansprüche 4-9,
**dadurch gekennzeichnet,**
**dass** die Transportadressen auf der Vermittlungsschicht des OSI-Referenzmodells gültig sind.

## Claims

1. Method for setting up an H.323 or SIP connection from a source network (LAN1) to a connection destination (EG2) which is external to the source network and is identified by logical address information (030-222), in which
- H.323 or SIP connection setup signalling (SET1,...,SET4) is conveyed by means of a first gateway device (GW1) from the source network (LAN1) via a first transit network (WAN1) to a second gateway device (GW2), the latter is used to convey it via a second transit network (WAN2) to a third gateway device (GW3), and the latter is used to convey it to a communication network (LAN2) which is routed to the connection destination (EG2), where
- the first gateway device (GW1) uses at least one section (030) of the logical address information (030-222) to derive a transport address (IPGW2) which identifies the second gateway device (GW2) in the first transit network (WAN1) and is used to convey the H.323 or SIP connection setup signalling to the second gateway device (GW2), and the second gateway device (GW2) uses at least one further section (030-2) of the logical address information (030-222) to derive a transport address (IPGW3) which identifies the third gateway device (GW3) in the second transit network (WAN2) and is used to convey the H.323 or SIP connection setup signalling to the third gateway device (GW3).

2. Method according to Claim 1,
**characterized**
**in that** the first gateway device (GW1) derives a transport address (IPGW2) from a different section (030) of the logical address information (030-222) than the second gateway device (GW2).

3. Method according to one of the preceding claims,
**characterized**
**in that** the H.323 or SIP connection setup signalling (SET1,...,SET4) transmits a transport address (IPEG2) identifying the transmission destination (EG2) to the source network (LAN1), and the result of this is that payload data to be transmitted over the H.323 or SIP connection are transmitted on a direct route from the source network (LAN1) to the transmission destination (EG2) using the transmitted transport address (IPEG2).

4. Communication system for setting up an H.323 or SIP connection from a source network (LAN1) to a connection destination (EG2) which is external to the source network and is identified by logical address information (030-222), having
- a first gateway device (GW1) for conveying H.323 or SIP connection setup signalling (SET1,...,SET4) from the source network (LAN1) to a first transit network (WAN1), a second gateway device (GW2) for conveying the H.323 or SIP connection setup signalling from the first transit network (WAN1) to a second transit network (WAN2), and a third gateway device (GW3) for conveying the H.323 or SIP connection setup signalling from the second transit network (WAN2) to a communication network (LAN2) which is routed to the connection destination (EG2), where
- the first gateway device (GW1) is designed such that, in the first gateway device (GW1), at least one section (030) of the logical address information (030-222) has an associated transport address (IPGW2) identifying the second gateway device (GW2) in the first transit network (WAN1), and the second gateway device (GW2) is designed such that, in the second gateway device (GW2), at least one further section (030-2) of the logical address information (030-222) has an associated transport address (IPGW3) identifying the third gateway device (GW3) in the second transit network (WAN2), and where
- the gateway devices have a respective switching device (VE) for deriving transport addresses from logical address information associated therewith and for conveying H.323 or SIP connection setup signalling using the derived transport addresses.

5. Communication system according to Claim 4,
**characterized**
**in that** the source network (LAN1) has an H.323 or SIP gatekeeper (GK1) for controlling H.323 or SIP connections internal to the source network.

6. Communication system according to Claim 5,
**characterized**
**in that** the first gateway device (GW1) has a first H.323 or SIP interface to the source network (LAN1) and a second H.323 or SIP interface to the first transit network (WAN1), where
the first H.323 or SIP interface is designed for operation in a gatekeeper-controlled H.323 or SIP mode, and the second H.323 or SIP interface is designed for simultaneous operation in a gatekeeperless H.323 or SIP mode.

7. Communication system according to one of the preceding Claims 4-6,
**characterized**
**in that** the first transit network (WAN1) is identical to the second transit network (WAN2).

8. Communication system according to one of the preceding Claims 4-7,
**characterized**
**in that** the logical address information (030-222) comprises a dialling code, a service number and/or a terminal call number.

9. Communication system according to one of the preceding Claims 4-8,
**characterized**
**in that** the logical address information comprises an email address, an alias address and/or a URL, Uniform Resource Locator.

10. Communication system according to one of the preceding Claims 4-9,
**characterized**
**in that** the transport addresses are valid on the network layer of the OSI reference model.

## Revendications

1. Procédé pour l'établissement d'une liaison H.323 ou SIP depuis un réseau source (LAN1) vers une destination (EG2) externe au réseau source et identifiée par une information d'adresse logique (030-222), dans lequel
- une signalisation d'établissement de liaison H.323 ou SIP (SET1, ..., SET4) est commutée au moyen d'un premier dispositif de passerelle (GW1) depuis le réseau source (LAN1) via un premier réseau transit (WAN1) vers un deuxième dispositif de passerelle (GW2), au moyen de celui-ci via un deuxième réseau transit (WAN2) vers un troisième dispositif de passerelle (GW3) et au moyen de celui-ci dans un réseau de communication (LAN2) menant à la destination (EG2),
- le premier dispositif de passerelle (GW1) déduisant au moins d'une partie (030) de l'information d'adresse logique (030-222) une adresse de transport (IPGW2) identifiant le deuxième dispositif de passerelle (GW2) dans le premier réseau transit (WAN1), à l'aide de laquelle la signalisation d'établissement de liaison H.323 ou SIP est commutée vers le deuxième dispositif de passerelle (GW2), et
le deuxième dispositif de passerelle (GW2) déduisant au moins d'une autre partie (030-2) de l'information d'adresse logique (030-222) une adresse de transport (IPGW3) identifiant le troisième dispositif de passerelle (GW3) dans le deuxième réseau transit (WAN2), à l'aide de laquelle la signalisation d'établissement de liaison H.323 ou SIP est commutée vers le troisième dispositif de passerelle (GW3).

2. Procédé selon la revendication 1
**caractérisé en ce que**
le premier dispositif de passerelle (GW1) déduit une adresse de transport (IPGW2) d'une autre partie (030) de l'information d'adresse logique (030-222) que le deuxième dispositif de passerelle (GW2).

3. Procédé selon l'une des revendications précédentes,
**caractérisé en ce que**
la signalisation d'établissement de liaison H.323 ou SIP (SET1, ..., SET4) demande d'envoyer une adresse de transport (IPEG2) identifiant la destination d'envoi (EG2) dans le réseau source (LAN1), suite à quoi les données utiles à transmettre dans le cadre de la liaison H.323 ou SIP sont transmises à l'aide de l'adresse de transport (IPEG2) envoyée, sur une voie d'acheminement direct, du réseau source (LAN1) vers la destination (EG2).

4. Système de communication pour l'établissement d'une liaison H.323 ou SIP depuis un réseau source (LAN1) vers une destination (EG2) externe au réseau source et identifiée par une information d'adresse logique (030-222), comprenant
- un premier dispositif de passerelle (GW1) destiné à commuter une signalisation d'établissement de liaison H.323 ou SIP (SET1, ..., SET4) depuis le réseau source (LAN1) dans un premier réseau transit (WAN1), un deuxième dispositif de passerelle (GW2) destiné à commuter la signalisation d'établissement de liaison H.323 ou SIP depuis le premier réseau transit (WAN1) dans un deuxième réseau transit (WAN2), ainsi qu'un troisième dispositif de passerelle (GW3) destiné à transmettre la signalisation d'établissement de liaison H.323 ou SIP depuis le deuxième réseau transit (WAN2) dans un réseau de communication (LAN2) menant à la destination (EG2),
- le premier dispositif de passerelle (GW1) étant étudié pour attribuer dans le premier dispositif de passerelle (GW1), au moins à une partie (030) de l'information d'adresse logique (030-222), une adresse de transport (IPGW2) identifiant le deuxième dispositif de passerelle (GW2) dans le premier réseau transit (WAN1), et le deuxième dispositif de passerelle (GW2) étant étudié pour attribuer dans le deuxième dispositif de passerelle (GW2), au moins à une autre partie (030-2) de l'information d'adresse logique (030-222), une adresse de transport (IPGW3) identifiant le troisième dispositif de passerelle (GW3) dans le deuxième réseau transit (WAN2), et
- les dispositifs de passerelle présentant chacun un dispositif de commutation (VE) destiné à déduire de ces informations d'adresse logiques attribuées des adresses de transport et à commuter des signalisations d'établissement de liaison H.323 ou SIP à l'aide des adresses de transport déduites.

5. Système de communication selon la revendication 4,
**caractérisé en ce que**
le réseau source (LAN1) présente un gatekeeper H.323 ou SIP (GK1) destiné à commander des liaisons H.323 ou SIP internes au réseau source.

6. Système de communication selon la revendication 5,
**caractérisé en ce que**
le premier dispositif de passerelle (GW1) présente une première interface H.323 ou SIP vers le réseau source (LAN1) et une deuxième interface H.323 ou SIP vers le premier réseau transit (WAN1), la première interface H.323 ou SIP étant configurée pour le fonctionnement dans un mode H.323 resp. SIP commandé par le gatekeeper et la deuxième interface H.323 ou SIP étant configurée pour le fonctionnement simultané dans un mode H. 323 resp. SIP sans gatekeeper.

7. Système de communication selon l'une des revendications précédentes 4 à 6,
**caractérisé en ce que**
le premier réseau transit (WAN1) est identique au deuxième réseau transit (WAN2).

8. Système de communication selon l'une des revendications précédentes 4 à 7,
**caractérisé en ce que**
l'information d'adresse logique (030-222) comprend un numéro d'indicatif, un numéro de service et/ou un numéro de terminal.

9. Système de communication selon l'une des revendications précédentes 4 à 8,
**caractérisé en ce que**
l'information d'adresse logique comprend une adresse e-mail, une adresse alias et/ou une URL, Uniform Resource Locator.

10. Système de communication selon l'une des revendications précédentes 4 à 9,
**caractérisé en ce que**
les adresses de transport sont valables sur la couche réseau du modèle de référence OSI.
